# EUROPEAN PATENT SPECIFICATION

(11) **EP 4 026 711 B1**
(45) Date of publication and mention of the grant of the patent: **09.12.2026**
(21) Application number: 21305025.5
(22) Date of filing: 12.01.2021
(51) Int. Cl.: B60H 1/00

(54) **A METHOD FOR REGULATING A THERMAL CONTROL SYSTEM OF A CABIN OF A VEHICLE**
VERFAHREN ZUR REGELUNG EINES THERMISCHEN STEUERSYSTEMS EINER KABINE EINES FAHRZEUGS
PROCÉDÉ DE RÉGULATION DE SYSTÈME DE CONTRÔLE THERMIQUE D'UNE CABINE D'UN VÉHICULE

(43) Date of publication of application: 13.07.2022
(73) Proprietor: VOLVO TRUCK CORPORATION, 405 08 Göteborg (SE)
(72) Inventor: LAUDET, Frédéric, 69200 VENISSIEUX (FR)
(74) Representative: Germain Maureau

(56) References cited:
- EP-A1- 2 332 757
- EP-B1- 2 332 757
- US-A1- 2004 079 099
- US-A1- 2016 144 685
- US-A1- 2018 170 143
- US-A1- 2018 194 194
- US-B1- 6 454 178

## Description

### TECHNICAL FIELD

The invention relates to a method for regulating a thermal control system of a cabin of a vehicle.

The invention can be applied in light, medium and heavy-duty vehicles, such as trucks, buses and construction equipment.

### BACKGROUND

A cabin of a vehicle is conventionally equipped with a thermal control system which comprises a thermal unit (HVAC Heater Ventilation and Air Conditioning ) and a control unit (including for example a control panel and an ECU) capable of controlling the thermal unit. Thus, the user compartment formed by the cabin can be heated or cooled, with the aim of having an inside ambient temperature close or equal to a target temperature.

A sun sensor in the cabin makes it possible to detect the sun position and to give this information to the HVAC ECU to provide a temperature correction. For example, in a vehicle having the driver seat on the left, if the sun is located on the left, then the temperature felt by the driver is higher. As a result, the thermal control unit is correctively controlled to provide less heat, to ensure an accurate driver's thermal comfort.

With a multi zone thermal control system (HVAC), the driver and the passenger can independently set the target temperature to be reached around their seats, according to their personal choices. US 6 454 178 discloses such a multi zone HVAC system.

However, most of the industrial vehicles are only equipped with a mono-zone thermal control system (HVAC) which is only capable of changing the inside ambient temperature in the user compartment as a whole. Thus, in case a temperature correction is provided owing to a sun sensor, the temperature correction applies to the whole user compartment. As a result, while the driver's thermal comfort can be improved, the passenger's thermal comfort can be worsen. With the above example, the sun being on the left of the cabin, the driver feels the heat of the sun behind the window, whereas the passenger is in the shade and the temperature he feels is therefore lower. In addition, if the sun sensor makes an automatic correction to improve the comfort of the driver by sending him more cold air to oppose solar radiation, the temperature around the passenger seat is further lower.

It therefore appears that there is room for improvement in the thermal regulation of a user compartment of a vehicle cabin.

### SUMMARY

An object of the invention is to provide a method for regulating a thermal control system of a cabin of a vehicle which improves the thermal comfort for both the driver and the passenger.

Another object of the invention is to provide such a method which is efficient when the driver is alone in the user compartment and when both a driver and a passenger are present. In particular, an object of the invention is to prevent the passenger comfort from being degraded.

The invention relates to a method for regulating a mono-zone thermal control system of a cabin of a vehicle, the method being according to claim 1.

The modulating command makes it possible to adapt the thermal control system regulation to various situations, in particular to the presence of a passenger or not, and to the effects of the sun on the local temperatures in the user compartment.

Consequently, the invention enables reaching a compromise between the local temperature around the driver seat and the local temperature around the passenger seat. It therefore improves the thermal comfort for both the driver and the passenger as compared to the main command alone, and to the combination of the main command and the corrective command.

These advantages can be obtained even with a mono-zone thermal control system, which is a cost-effective solution and does not require changing the vehicle thermal control system.

The parameter may be one of: the sun presence (for example if the sun is present or hidden by clouds, by a wall, etc.), the sun position relative to the vehicle cabin, the sun intensity.

According to an embodiment, if no passenger is present, then no modulating command is provided to the thermal unit. Thus, in such a situation, the thermal comfort is optimized for driver, and the second local temperature is not taken into account as it does not affect anyone.

In an embodiment, the modulating command consists in deactivating the corrective command. This solution is easy to implement.

In another embodiment, the modulating command consists in operating the corrective command between a 100% active state and a 100% inactive state. The lower and/or upper limits "100" may be excluded. This allows a finest regulation, in order to achieve a satisfactory compromise between the driver and the passenger in terms of thermal comfort.

In practice, for example:
- the gap between the first local temperature and the target temperature, on the one hand,
- and the gap between the second local temperature and target temperature, on the other hand,
may differ by less than 20%, or less than 10%, in absolute value.

As a consequence, one of the driver and the passenger may be a little warmer while the other one is a little colder, but none of them is exposed to a high temperature difference with respect of the target temperature.

Detecting whether a passenger is present or not can be achieved by means of a sensor located in the passenger seat, such as a weight sensor. The sensor can be part of a seat belt reminder system which can be a conventional equipment of the vehicle. Thus, the invention makes use of an existing system and does not require the implementation of an additional sensor or system. Other passenger detectors can be used, such as a camera.

The sun data may be collected by a sun sensor arranged in the user compartment.

The method of the invention as previously described can regulate a mono-zone thermal control system of a cabin of a vehicle.

It has to be noted that the thermal unit may further be capable of changing the air distribution and air flow towards the user compartment.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a partial side view of a vehicle having a cabin in which the regulating method of the invention can be implemented;
Fig. 2 is a schematic and partial representation of the vehicle cabin including a thermal control system that can be regulated with the method according to the invention.

### DETAILED DESCRIPTION OF EXAMPLE EMBODIMENTS OF THE INVENTION

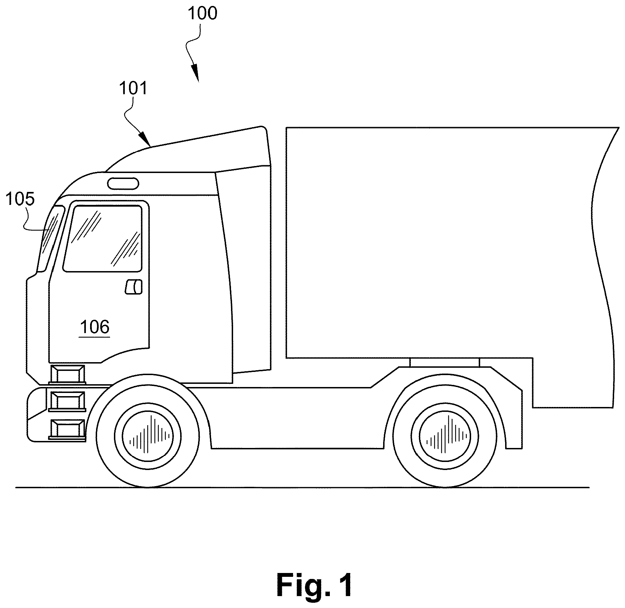

Figure 1 partially shows a vehicle 100 according to an embodiment of the invention, in which the method according to the invention can be implemented.

The vehicle 100 can be an industrial vehicle such as a truck. The vehicle 100 comprises a cabin 101 which forms a user compartment 102 in which are arranged a driver seat 103 and a passenger seat 104. The cabin 101 further has a windscreen 105 and side walls 106. A dashboard 107 is arranged in the cabin 101.

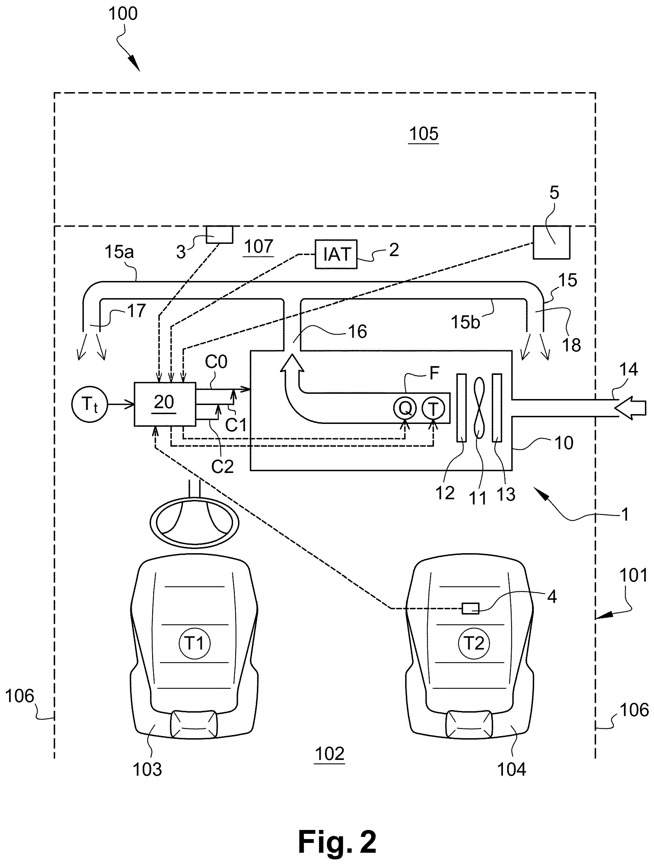

The cabin 101 further comprises a thermal control system 1, illustrated in figure 2. The purpose of the thermal control system 1 is to bring and maintain the inside ambient temperature IAT in the user compartment 102 to a target temperature Tt that is preset by the user, i.e. the cabin occupant, who can typically be the vehicle driver.

The inside ambient temperature IAT can be measured by a dedicated sensor 2 located in the user compartment 102. This sensor 2 can be located in the dashboard 107, as schematically shown in figure 2. The inside ambient temperature IAT is meant to represent a global temperature in the user compartment 102 but does not precisely represent local temperatures in the user compartment 102. Such local temperatures include a first local temperature T1 around the driver seat 103, and a second local temperature T2 around the passenger seat 104.

The thermal control system 1 basically comprises a thermal unit 10 capable of changing the inside ambient temperature IAT in the user compartment 2 and a control unit 20 capable of controlling the thermal unit 10 based on the target temperature Tt.

The thermal unit 10 can typically include a fan 11, a heater 12 and a cooler 13. By means of the fan 11, outside air can be sucked in a channel 14, can enter the thermal unit 10 and pass through the heater 12 and the cooler 13. Therefore, the thermal unit 10 is capable of providing a heated or cooled air flow F which will be directed towards the user compartment 102. In practice, the heater 12 can be a radiator, and the cooler 13 can be an evaporator forming part of a refrigerant circuit of an air conditioning system. Such a refrigerant circuit typically carries a refrigerant in a loop through a compressor, a condenser, an expander and an evaporator capable of cooling an air flow directed towards the user compartment 102.

The thermal control system 1 also comprises air circuits connected to the thermal unit 10 and designed to carry some of the air flow towards various locations in the cabin 101 and to blow it inside the user compartment 102.

Figure 2 shows one air circuit 15 which has an inlet 16 connected to the thermal unit 10 and two outlets 17, 18 through which an air sub flow is blown towards the user compartment 102. The outlets may be located near each one of the cabin side walls 106. More specifically, the air circuit 15 can include:
- a first duct 15a having a first outlet 17 which opens towards the driver seat 103, for blowing air towards the driver's torso;
- and a second duct 15b having a second outlet 18 which opens towards the passenger seat 104, for blowing air towards the passenger's torso;
the first and second ducts 15a, 15b being connected to the same inlet 16.

Part of the air blown through outlets 17, 18 could also be directed towards the corresponding adjacent side wall 106. Although this is not illustrated, the air circuit 15 could be provided with more ducts and/or more outlets.

The thermal control system 1 may comprise other air circuits (not shown), such as: an air conduit for blowing air towards the windscreen 105 and/or the head of the cabin occupant(s); an air conduit for blowing air towards the feet of the cabin occupant(s) and/or the area located along the lower part of the side walls 106.

The thermal control system 1 may be a mono-zone thermal control system capable of changing the inside ambient temperature IAT in the user compartment 102 as a whole.

In such a mono-zone thermal control system, one air circuit 15 may be provided with several ducts 15a, 15b each associated with several regions of the user compartment 102 (typically a first area around the driver seat 103 and a second area around the passenger seat 104), but these ducts are not independently controlled. In other words, as compared to a multi zone thermal control system, it is not possible to provide an air flow having a first temperature at the outlet 17 and an air flow having a second temperature - different from the first temperature - at the second outlet 18.

The control unit 20 is capable of automatically controlling parameters of the air flow F, such as the temperature T and the rate Q, in order to reach or maintain the target temperature Tt in the user compartment 102. In concrete terms, controlling the air flow temperature T can be achieved by controlling the heater 12 and the cooler 13, while controlling the air flow rate Q can be achieved by controlling the speed of fan 11.

The vehicle 100 is equipped with sensors capable of measuring or collecting several data used as input data for allowing the control unit 20 to appropriately control the thermal unit 10. Each of these sensors, among which the sensor 2 which measures the inside ambient temperature IAT, is operatively connected to the control unit 20.

The thermal control system 1 comprises a sun sensor 3 which is capable of collecting a so-called "sun data" representative of at least one parameter which is related to the sun and which may influence the first local temperature T1 in the user compartment 102, around the driver seat 103. This parameter can be one of: the sun presence, the sun position relative to the vehicle cabin 101 (for example on the side of the driver seat 103 or on the opposite side), the sun intensity. As shown in figure 2, the sun sensor 3 can be located in the user compartment 102, on the top of the dashboard 107, close to the bottom of the windshield 105.

The thermal control system 1 further comprises a passenger detector, which is capable of detecting whether a passenger is present or not, i.e. whether a passenger occupies the passenger seat 104 or not. The passenger detector can comprise a sensor 4 located in the passenger seat 104, such as a weight sensor. This sensor 4 can typically be part of a seat belt reminder system of the vehicle 100. Alternatively, the passenger detector can comprise a camera 5 which may be arranged in the user compartment 102.

The vehicle 100 may be equipped with other sensors such as an outside ambient temperature sensor, a windscreen interior side temperature sensor, etc.

The purpose of the method according to the invention is to regulate the thermal control system 1 to improve the thermal comfort in the user compartment 102, for all occupants, whether the driver is alone or a passenger is present.

According to this method, the control unit 20 provides the thermal unit 10 with various commands depending on the user's preferences (in particular the target temperature Tt), passenger presence or absence, and several input data (in particular the sun data).

The method comprises controlling the thermal unit 10 according to a main command C0, with the aim of having the inside ambient temperature IAT in the user compartment 102 equal to the target temperature Tt.

Depending on the sun data collected by the sun sensor 3, the control unit 20 provides a corrective command C1 to the thermal unit 10 for correcting the main command, in order to reduce the gap between the first local temperature T1 and the target temperature Tt.

For example, the corrective command C1 may consist in requiring that less warm air (or more cold air) is blown towards the driver seat 103 when the sun is detected to be on the front of the vehicle 100 or on the left of the vehicle 100 (with a driver seat 103 located on the left of the vehicle 100), as compared to the amount of air that would be blown according to the main command C0 alone. Indeed, in such a configuration, the sun warms the driver and increases the first local temperature T1. The sun sensor 3 provides the corresponding sun data to the control unit 20 and, without any action from the driver, the operation of the thermal unit 10 is automatically corrected so the thermal unit 10 provides less warm air or more cold air.

On the contrary, when the sun is detected to be on the right of the vehicle 100, resulting in the driver being on the shade, the corrective command C1 may consist in automatically correcting the operation of the thermal unit 10 so that it provides more warm air or less cold air, as compared to the amount of air that would be blown according to the main command C0 alone.

When no sun is detected, the corrective command C1 may be nil as, with this configuration, the first local temperature T1 is substantially identical to the inside ambient temperature IAT.

In practice, the corrective command C1 may consist in correcting the target temperature Tt to a corrected target temperature Tt1 which can be lower or higher than the target temperature Tt, depending on the sun data. The thermal unit 10 is then controlled by the control unit 20 with the aim of having the inside ambient temperature IAT in the user compartment 102 equal to the corrected target temperature Tt1.

It can be understand from the above explanation that the corrective command C1 improves the thermal comfort of the driver, but can worsen the thermal comfort of the passenger. For example, when the sun is detected to be on the left of the vehicle 100, the passenger is on the shade and therefore the second local temperature T2 can be lower than the inside ambient temperature IAT. As the air conducts 15a and 15b of the air circuit 15 are controlled as a whole, correcting the operation of the thermal unit 10 to provide less warm air (or more cold air) through the first outlet 17, for improving the driver's thermal comfort, also means providing less warm air (or more cold air) through the second outlet 18, towards the passenger. This results in further lowering the second local temperature T2, i.e. to affect the thermal comfort of the passenger.

To avoid this drawback, the method according to the invention further comprises, if a passenger is present, providing a modulating command C2 to the thermal unit 10 for modulating the corrective command C1, in order to reduce the gap between the first local temperature T1 and the second local temperature T2.

The modulating command C2 may consist in deactivating the corrective command C1.

Thus, with the above example, the thermal comfort of the passenger will not be worsen; the thermal comfort of the driver will not be improved as compared to the main command, but will still be acceptable. The method thus allows achieving a compromise as regards the thermal comfort of the driver and the passenger.

Alternatively, the modulating command C2 may consist in operating the corrective command between a 100% active state and a 100% inactive state, with the lower and upper limits "100" being excluded. In other words, the thermal comfort of the driver may be improved to some extent, while the thermal comfort of the passenger is not greatly affected. Such a modulating command C2 may result in the control unit 20 controlling the thermal unit to get to an inside ambient temperature IAT substantially equal to a modulated target temperature Tt2. This modulated target temperature Tt2 can be comprised between the target temperature Tt and the corrected target temperature Tt1.

This embodiment of the invention makes it possible to optimize the global thermal comfort, i.e. to achieve a compromise between the first local temperature T1 and the second local temperature T2.

In case no passenger is present, then no modulating command C2 is provided to the thermal unit 10. In other words, with the invention, the thermal comfort of the driver remains optimized as a function of the sun when the driver is alone in the user compartment 102.

It is to be understood that the present invention is not limited to the embodiments described above and illustrated in the drawings; rather, the skilled person will recognize that many changes and modifications may be made within the scope of the appended claims.

## Claims

1. A method for regulating a mono-zone thermal control system (1) of a cabin (101) of a vehicle (100), the cabin (101) forming a user compartment (102) having a driver seat (103) and a passenger seat (104), the thermal control system (1) comprising a thermal unit (10) and a control unit (20) capable of controlling the thermal unit (10), the method comprising:
- controlling the thermal unit (10) according to a main command (C0), with the aim of changing as a whole an inside ambient temperature (IAT) in the user compartment (102), in order to have said inside ambient temperature (IAT) equal to a target temperature (Tt);
- collecting a so-called "sun data" representative of at least one parameter which is related to the sun and which may influence a first local temperature (T1) in the user compartment (102), around the driver seat (103);
- depending on said sun data, providing a corrective command (C1) to the thermal unit (10) for correcting the main command (C0), in order to reduce the gap between the first local temperature (T1) and the target temperature (Tt);
- detecting whether a passenger is present, i.e. occupies the passenger seat (104), or not;
- if a passenger is present, providing a modulating command (C2) to the thermal unit (10) for modulating the corrective command (C1), in order to reduce the gap between the first local temperature (T1) and a second local temperature (T2) in the user compartment (102), around the passenger seat (104).

2. The method according to claim 1, **characterized in that** the parameter is one of: the sun presence, the sun position relative to the vehicle cabin (101), the sun intensity.

3. The method according to claim 1 or claim 2, **characterized in that**, if no passenger is present, then no modulating command (C2) is provided to the thermal unit (10).

4. The method according to any one of claims 1 to 3, **characterized in that** the modulating command (C2) consists in deactivating the corrective command (C1).

5. The method according to any one of claims 1 to 3, **characterized in that** the modulating command (C2) consists in operating the corrective command (C1) between a 100% active state and a 100% inactive state.

6. The method according to any one of claims 1 to 5, **characterized in that** detecting whether a passenger is present or not is achieved by means of a sensor (4) located in the passenger seat (104), such as a weight sensor.

7. The method according to any one of claims 1 to 6, **characterized in that** the sun data is collected by a sun sensor (3) arranged in the user compartment (102).

## Patentansprüche

1. Verfahren zur Regelung eines Einzelzonen-Temperaturregelsystems (1) einer Kabine (101) eines Fahrzeugs (100), wobei die Kabine (101) einen Fahrgastraum (102) mit einem Fahrersitz (103) und einem Beifahrersitz (104) bildet, wobei das Temperaturregelsystem (1) eine thermische Einheit (10) und eine Steuereinheit (20) umfasst, die in der Lage ist, die thermische Einheit (10) zu steuern, wobei das Verfahren umfasst:
- Steuern der thermischen Einheit (10) gemäß einem Hauptbefehl (C0), mit dem Ziel, die Innentemperatur (IAT) im Fahrgastraum (102) insgesamt zu verändern, damit die Innentemperatur (IAT) gleich einer Zieltemperatur (Tt) ist;
- Erfassen sogenannter "Sonnendaten", die mindestens einen Parameter repräsentieren, der mit der Sonne in Zusammenhang steht und der eine erste lokale Temperatur (T1) im Fahrgastraum (102) um den Fahrersitz (103) herum beeinflussen kann;
- abhängig von den Sonnendaten, Bereitstellen eines Korrekturbefehls (C1) an die thermische Einheit (10) zum Korrigieren des Hauptbefehls (C0), um die Differenz zwischen der ersten lokalen Temperatur (T1) und der Zieltemperatur (Tt) zu verringern;
- Erkennen, ob ein Fahrgast anwesend ist, d. h., den Beifahrersitz (104) besetzt oder nicht;
- wenn ein Fahrgast anwesend ist, wird ein modulierender Befehl (C2) an die thermische Einheit (10) zum Modulieren des Korrekturbefehls (C1) bereitgestellt, um die Differenz zwischen der ersten lokalen Temperatur (T1) und einer zweiten lokalen Temperatur (T2) im Fahrgastraum (102) um den Beifahrersitz (104) herum zu verringern.

2. Verfahren nach Anspruch 1, **dadurch gekennzeichnet, dass** der Parameter einer der folgenden ist: das Vorhandensein der Sonne, die Sonnenposition relativ zur Fahrzeugkabine (101), die Sonnenintensität.

3. Verfahren nach Anspruch 1 oder Anspruch 2, **dadurch gekennzeichnet, dass**, wenn kein Fahrgast anwesend ist, kein modulierender Befehl (C2) an die thermische Einheit (10) bereitgestellt wird.

4. Verfahren nach einem der Ansprüche 1 bis 3, **dadurch gekennzeichnet, dass** der modulierende Befehl (C2) darin besteht, den Korrekturbefehl (C1) zu deaktivieren.

5. Verfahren nach einem der Ansprüche 1 bis 3, **dadurch gekennzeichnet, dass** der modulierende Befehl (C2) darin besteht, den Korrekturbefehl (C1) zwischen einem zu 100 % aktiven Zustand und einem zu 100 % inaktiven Zustand zu betreiben.

6. Verfahren nach einem der Ansprüche 1 bis 5, **dadurch gekennzeichnet, dass** das Erkennen, ob ein Fahrgast anwesend ist oder nicht, mittels eines im Fahrgastsitz (104) befindlichen Sensors (4), wie beispielsweise eines Gewichtssensors, erfolgt.

7. Verfahren nach einem der Ansprüche 1 bis 6, **dadurch gekennzeichnet, dass** die Sonnendaten durch einen im Fahrgastraum (102) angeordneten Sonnensensor (3) erfasst werden.

## Revendications

1. Procédé de régulation d'un système de commande thermique mono-zone (1) d'une cabine (101) d'un véhicule (100), la cabine (101) formant un compartiment utilisateur (102) ayant un siège conducteur (103) et un siège passager (104), le système de commande thermique (1) comprenant une unité thermique (10) et une unité de commande (20) capable de commander l'unité thermique (10), le procédé comprenant :
- la commande de l'unité thermique (10) selon une instruction principale (C0), dans le but de modifier globalement une température ambiante intérieure (IAT) dans le compartiment utilisateur (102), afin que ladite température ambiante intérieure (IAT) soit égale à une température cible (Tt) ;
- la collecte de données dites « données solaires » représentatives d'au moins un paramètre qui est lié au soleil et qui peut influencer une première température locale (T1) dans le compartiment utilisateur (102), autour du siège conducteur (103) ;
- en fonction desdites données solaires, la fourniture d'une instruction de correction (C1) à l'unité thermique (10) pour corriger l'instruction principale (C0), afin de réduire l'écart entre la première température locale (T1) et la température cible (Tt) ;
- la détection du fait qu'un passager est présent, c'est-à-dire qu'il occupe le siège passager (104), ou non ;
- si un passager est présent, la fourniture d'une instruction de modulation (C2) à l'unité thermique (10) pour moduler l'instruction de correction (C1), afin de réduire l'écart entre la première température locale (T1) et une seconde température locale (T2) dans le compartiment utilisateur (102), autour du siège passager (104).

2. Procédé selon la revendication 1, **caractérisé en ce que** le paramètre est l'un parmi : la présence du soleil, la position du soleil par rapport à la cabine de véhicule (101), l'intensité du soleil.

3. Procédé selon la revendication 1 ou 2, **caractérisé en ce que**, si aucun passager n'est présent, alors aucune instruction de modulation (C2) n'est fournie à l'unité thermique (10).

4. Procédé selon l'une quelconque des revendications 1 à 3, **caractérisé en ce que** l'instruction de modulation (C2) consiste à désactiver l'instruction de correction (C1).

5. Procédé selon l'une quelconque des revendications 1 à 3, **caractérisé en ce que** l'instruction de modulation (C2) consiste à faire fonctionner l'instruction de correction (C1) entre un état actif à 100% et un état inactif à 100%.

6. Procédé selon l'une quelconque des revendications 1 à 5, **caractérisé en ce que** la détection du fait qu'un passager est présent ou non est réalisée au moyen d'un capteur (4) situé dans le siège passager (104), tel qu'un capteur de poids.

7. Procédé selon l'une quelconque des revendications 1 à 6, **caractérisé en ce que** les données solaires sont collectées par un capteur solaire (3) agencé dans le compartiment utilisateur (102).
